# EUROPÄISCHE PATENTSCHRIFT

(11) **EP 2 330 836 B1**
(45) Veröffentlichungstag und Bekanntmachung des Hinweises auf die Patenterteilung: **20.02.2019**
(21) Anmeldenummer: 10193766.2
(22) Anmeldetag: 06.12.2010
(51) Int. Cl.: H04W 4/16

(54) **Kommunikationssystem mit wenigstens einer mobilen Kommunikationseinheit**
Communication system with at least one mobile communication unit
Système de communication doté d'au moins une unité de communication mobile

(30) Priorität: 04.12.2009 DE 102009047557
(43) Veröffentlichungstag der Anmeldung: 08.06.2011
(73) Patentinhaber: Vodafone Holding GmbH, 40547 Düsseldorf (DE)
(72) Erfinder: Staufer, Tillmann, D-40547 Düsseldorf (DE); Willimowski, Ingo, 47475, Kamp-Lintfort (DE)
(74) Vertreter: Bals, Rüdiger

(56) Entgegenhaltungen:
- WO-A2-03/003653
- WO-A2-2005/086966
- US-A1- 2005 228 895
- US-A1- 2007 293 207

## Beschreibung

Die Erfindung betrifft ein Kommunikationssystem mit wenigstens einer ersten Kommunikationseinheit, die insbesondere als eine mobile Telefoneinheit, ausgestaltet ist, wobei die erste Kommunikationseinheit eine Schnittstelle aufweist, und über die Schnittstelle eine Mobilfunkverbindung mit dem Kommunikationssystem aufbaubar ist, und wenigstens einer zweiten Kommunikationseinheit, die über eine Kommunikationsverbindung mit dem Kommunikationssystem verbunden ist, wobei zumindest eine Kommunikationseinheit über ein Kommunikationsmittel und zumindest die andere Kommunikationseinheit über eine abrufbare Zustandsinformation verfügt, gemäß des Oberbegriffs des Patentanspruches 1. Ferner ist die Erfindung auch auf Kommunikationsverfahren gemäß des Oberbegriffs von Anspruch 14 gerichtet.

Aus der Druckschrift EP 2 015 537 A1 ist ein Gateway bekannt, das mehrere Typen von Signalprotokollen unterstützt und es ermöglicht, Kommunikationseinheiten eines IMS-Netzes (IMS = IP Multimedia Subsystem) mit Kommunikationseinheiten eines Nicht-IMS-Netzes zu verbinden. Das Gateway weist einen Protokollkonverter auf, so dass Informationen zwischen einer IMS-Kommunikationseinheit und einer Nicht-IMS-Kommunikationseinheit ausgetauscht werden können. Ein Connection Manager kann Services zwischen den Kommunikationseinheiten steuern, wobei ebenso PSTN (Public Standard Telephone Network) und ISDN (Integrated Services Digital Network) Informationen untereinander austauschbar sind. Es hat sich allerdings als nachteilig herausgestellt, dass ein solches Gateway zwar Informationen zwischen zwei verschiedenen Protokollen übertragen kann, es allerdings nicht möglich ist, Zusatzinformationen der an dem Gateway angeschlossenen Kommunikationseinheiten über das Gateway zu übertragen.
Aufgabe der vorliegenden Erfindung ist es, ein Kommunikationssystem zu schaffen, was einen hohen Bedienkomfort und eine einfache Benutzung ermöglicht.
Die Aufgabe wird erfindungsgemäß gelöst durch ein Kommunikationssystem mit den Merkmalen gemäß des unabhängigen Patentanspruches 1 sowie durch ein Verfahren mit den Merkmalen gemäß des unabhängigen Patentanspruches 10. In den abhängigen Ansprüchen sind bevorzugte Weiterbildungen aufgeführt. Zudem gelten Merkmale und technische Details, die im Zusammenhang mit dem Kommunikationssystem beschrieben sind dabei selbstverständlich auch im Zusammenhang mit dem erfindungsgemäßen Verfahren und umgekehrt.
Erfindungsgemäß ist vorgesehen, dass zumindest eine Zustandsinformation der entsprechenden ersten Kommunikationseinheit über das Kommunikationssystem an das Kommunikationsmittel der anderen zweiten Kommunikationseinheit übertragen wird. Selbstverständlich kann auch eine Zustandsinformation von der zweiten Kommunikationseinheit auf ein Kommunikationsmittel der ersten Kommunikationseinheit über das Kommunikationssystem übertragen werden. Auch ist es denkbar, dass Zustandsinformationen von mehreren (zweiten) Kommunikationseinheiten auf eine oder mehrere erste Kommunikationseinheit bzw. auf deren Kommunikationsmittel übertragbar sind und umgekehrt. Die Zustandsinformationen können Verbindungsstatusinformationen und/oder Funktionsmerkmalsinformationen umfassen.

Anhand dieser Zustandsinformationen kann z. B. eine Statusmeldung "Benutzer B telefoniert" von der zweiten Kommunikationseinheit an das Kommunikationsmittel der ersten Kommunikationseinheit, die insbesondere eine mobile Telefoneinheit ist, übermittelt werden bzw. auch umgekehrt. Diese Übermittlung erfolgt insbesondere wahlfrei, so dass ein Benutzer A der ersten Kommunikationseinheit keinen Anruf tätigen muss, um die Statusmeldung der zweiten Kommunikationseinheit in Erfahrung zu bringen. Folglich kann der Benutzer A der ersten Kommunikationseinheit direkt den Zustand, insbesondere den Gerätezustand, als Information auf dem Kommunikationsmittel angezeigt bekommen. Somit muss er beispielsweise nicht ständig an der zweiten Kommunikationseinheit anrufen, um zu erfahren, dass diese noch besetzt bzw. benutzt wird. Anhand dieser Zustandsinformationen ist eine einfache und sehr praktische Benutzung des Kommunikationssystems möglich. Die entsprechenden Verknüpfungsinformationen, die notwendig sind, um die Zustandsinformationen wahlfrei zwischen den Kommunikationseinheiten auszutauschen, sind in dem Kommunikationssystem, insbesondere einem Presence Server oder einer weiteren Entität, hinterlegt und dort auch veränderbar.

Ebenfalls kann eine Zustandsinformation beispielsweise die Statusmeldung aufweisen: "Benutzer B telefoniert ist jedoch frei für einen SMS-Empfang" oder "Kommunikationseinheit ist in einer Stunde (oder ab 15.00 Uhr) bereit für eingehende Telefonate", die von der entsprechenden Kommunikationseinheit des Benutzers B an die Kommunikationseinheit des Benutzers A übertragen wird. Auch kann z. B. die Funktionsmerkmalsinformation "Kommunikationseinheit verfügt über einen Drucker" oder "Kommunikationseinheit verfügt über ein Blutdruckmessgerät" an das Kommunikationsmittel der mobilen Kommunikationseinheit übermittelt werden. Bei der (zweiten) Kommunikationseinheit, die die Zustandsinformationen bereitstellt bzw. liefert, kann es sich ebenfalls beispielsweise um eine weitere mobile Telefoneinheit oder ein drahtgebundenes Telekommunikationsendgerät oder dergleichen handeln. Die von der Kommunikationseinheit erhaltenen Zustandsinformationen werden mittels des Kommunikationsmittels dem Benutzer A der ersten Kommunikationseinheit angezeigt bzw. übermittelt. Somit muss Benutzer A nicht bei Benutzer B anrufen, um an diese Informationen zu gelangen. Auch ist es denkbar, dass nicht nur eine Kommunikationseinheit die Zustandsinformationen sondern eine ganze Gruppe von gleichen oder unterschiedlichen Kommunikationseinheiten ihre jeweiligen Zustandsinformationen an die erste Kommunikationseinheit bzw. eine weitere Gruppe von Kommunikationseinheiten, insbesondere von mobilen Telefoneinheiten, übermittelt. Somit können von mehreren Kommunikationseinheiten die Zustandsinformationen an ein und dieselbe oder ebenfalls mehrere andere Kommunikationseinheiten übermittelt werden.

Besonders vorteilhaft ist, dass wenigstens eine Kommunikationsverbindung teilweise oder ganz drahtlos oder drahtgebunden aufbaubar ist, so dass das Einsatzgebiet der Erfindung nicht auf ein Kommunikationssystem mit mobilen Kommunikationseinheiten beschränkt ist. Somit kann als Kommunikationseinheit eine Telefoneinheit an das Kommunikationsnetz gekoppelt werden, deren Nutzdatenübertragung analog oder digital erfolgt, insbesondere, dass die Telefoneinheit für einen POTS (Plain Old Telephone Service), einen PSTN (Public Switched Telephone Network), einen GSTN (General Switched Telephone Network), und/oder einen ISDN (Integrated Services Digital Network) Telefondienst ausgelegt sein kann. Zu dem kann die Kommunikationseinheit nach einem CT1 (Cordless Telephone), einem CT2 oder einem DECT (Digital Enhanced Cordless Telecommunication) Standard arbeiten. Die drahtgebundene Version bietet den besonderen Vorteil, dass eine Aufzeichnung durch unbefugte Dritte nahezu ausgeschlossen ist. Zudem wird es ermöglicht, drahtgebundene Telefonnetze, insbesondere interne ISDN-Netze, an das Kommunikationssystem zu koppeln. Auf der anderen Seite bietet eine drahtlose Kommunikationsverbindung die Möglichkeit, die Kommunikationseinheit mit dem Kommunikationssystem über eine Mobilfunkverbindung zu koppeln. Dabei können folgende Übertragungsstandards, die im Übrigen auch für die Mobilfunkverbindung der mobilen Telefoneinheit mit dem Kommunikationssystem gelten, zur Anwendung kommen: GSM, insbesondere CSD, HSCSD, GPRS, EDGE, Streaming, Generic Access, Cell Broadcast oder BOS-GSM. Auch der Einsatz der dritten Generation des Mobilfunkstandards (3G) kann dabei zum Einsatz kommen (UMTS), insbesondere HSDPA, sowie auch LTE (Long Term Evolution), ein Mobilfunkstandard, der als UMTS-Nachfolger definiert wird.

Im Sinne der Erfindung wird jedoch eine Übertragung der Zustandsinformation von einer drahtgebundenen Kommunikationseinheit auf eine andere drahtgebundene Kommunikationseinheit explizit ausgeschlossen.

Weiterhin ist es vorteilhaft, dass die Zustandsinformation der zweiten Kommunikationseinheit eine Information über den Verbindungsstatus aufweist, insbesondere eine Information über den Verbindungsstatus über eine drahtgebundene, DECT-, GSM-, GPRS-, oder UMTS-Konnektivität mit dem Kommunikationssystem aufweist. Zu der Information der eigentlichen Konnektivität mit dem Kommunikationssystem können weitere Informationen der Information über den Verbindungsstatus, wie die aktuelle mögliche Bandbreite der Kommunikationseinheit mit dem Kommunikationssystem, hinzugefügt werden. Dadurch kann neben der Information der Bereitschaft zu einer möglichen Kommunikationsverbindung mit der mobilen Telefoneinheit, ein Rückschluss auf die Dauer der zu übertragenen Daten von einer ersten mobilen Kommunikationseinheit an die zweite Kommunikationseinheit geschlossen werden. Dieses ist in besonderem Maße wichtig für die Übermittlung größerer Datenmengen, um eine sichere Datenübertragung zu gewährleisten. Zu dem ist es denkbar, dass zu der Information des Verbindungsstatus, die Information über die maximal mögliche Datenspeicherung der Kommunikationseinheit hinzugefügt wird. Damit ist es der ersten mobilen Kommunikationseinheit möglich zu ermitteln, welche Datenmengen an die zweite Kommunikationseinheit übertragen werden können. Zudem kann ermittelt werden, ob z. B. der elektronische Anhang einer E-Mail, der eine beliebige Datengröße haben kann, an die zweite Kommunikationseinheit übermittelbar ist. Zusammen mit der Information, ob die zweite Kommunikationseinheit drahtgebunden oder drahtlos an das Kommunikationssystem gekoppelt ist, kann die erste mobile Kommunikationseinheit ermitteln, ob der Empfänger, in diesem Fall die zweite Kommunikationseinheit, die übermittelten Daten diese Kommunikationseinheit geografisch abhängig oder unabhängig erreichen. Hier kann z. B. das Szenario einer Übermittlung von Geschäftsdaten genannt werden, wobei der Benutzer der ersten mobilen Kommunikationseinheit ein erhöhtes Interesse daran hat, dass die an die zweite Kommunikationseinheit gesendeten Daten sicher und nur von dem richtigen Benuzter von dieser Kommunikationseinheit geographisch unabhängig empfangen und gespeichert werden können.

Weiterhin hat es sich als vorteilhaft erwiesen, dass die Zustandsinformation der zweiten Kommunikationseinheit eine Information über Funktionsmerkmale dieser aufweist, insbesondere über eine Information von SMS- und/oder IMS- und/oder MMS- und/oder WAP- und/oder JAVA- und/oder E-Mail- und/oder FAX-Funktionsmerkmale verfügt. Zudem können weitere Informationen über mögliche Funktionalitäten der zweiten Kommunikationseinheit wie GPS, einer Mailbox oder weiteren Funktionsmerkmalen sowie drahtlosen Schnittstellen, insbesondere Bluetooth, WLAN oder Infrarot (IrDA) hinzugefügt werden. Hierdurch wird dem Benutzer der ersten mobilen Kommunikationseinheit die Möglichkeit eingeräumt, bestimmte technische Merkmale seiner mobilen Kommunikationseinheit auf die Merkmale der zweiten Kommunikationseinheit abzustimmen. So kann der Benutzer der mobilen Kommunikationseinheit erkennen, ob z. B. eine Übermittlung einer MMS auch auf der zweiten Kommunikationseinheit empfangbar und/oder anzeigbar ist. Zudem ist es vorstellbar, dass die zweite Kommunikationseinheit GPS-Daten an die erste Kommunikationseinheit überträgt, so dass diese erste Kommunikationseinheit den Standort der zweiten Kommunikationseinheit anhand dieser Informationen bestimmen kann. Zudem ist denkbar, dass die zweite ebenfalls mobile Kommunikationseinheit ihre Daten der Mobilfunkzelle, in der diese aktuell eingebucht ist, der ersten Kommunikationseinheit sendet, so dass eine Standortbestimmung auch durch diese übermittelten Daten ermöglicht werden kann. Weiterhin kann der Benutzer A der ersten Kommunikationseinheit gezielt das Funktionsmerkmal benutzen, dass die zweite Kommunikationseinheit zur Verfügung stellen kann, beispielsweise einen angeschlossenen Drucker. Dieses ermöglicht eine zuverlässige Kommunikation über das gewünschte Funktionsmerkmal. In Verbindung mit der Information über den Verbindungsstatus können der ersten Kommunikationseinheit Alternativen von Funktionsmerkmalen übersendet werden, die für eine Kommunikationsverbindung zwischen der zweiten Kommunikationseinheit und der ersten Kommunikationseinheit möglich sind, auch wenn ein Funktionsmerkmal der zweiten Kommunikationseinheit zum aktuellen Zeitpunkt für die erste mobile Kommunikationseinheit nicht zugänglich ist. Zudem ist es vorstellbar, dass über eine einstellbare Konfiguration - in Form eines Sicherheits- oder Konfigurations-Profils - in der zweiten Kommunikationseinheit der Zugriff auf die Verbindungsstatusinformation und/oder die Funktionsmerkmalsinformation von der ersten Kommunikationseinheit ermöglicht oder unterdrückt werden kann. Damit wird sichergestellt, dass nicht alle (ersten) mobilen Kommunikationseinheiten - sondern nur die im Profil zugelassenen mobilen Kommunikationseinheiten oder entsprechende Gruppen - über sensible Daten wie z. B. den aktuellen Standort der zweiten Kommunikationseinheit verfügen können. Zudem können Applikationsinformationen der zweiten Kommunikationseinheit übermittelt werden, wie z. B. ein an die zweite Kommunikationseinheit gekoppelte medizinische Applikation, insbesondere eines Blutdruckmessers. Dies ermöglicht einem medizinischen Dienst, den Gesundheitszustand des Benutzers einer zweiten Kommunikationseinheit zu erfassen. So kann beispielsweise festgestellt werden, welche weitere (zweite) Kommunikationseinheit, die sich in der gleichen Mobilfunkzelle wie die erste Kommunikationseinheit befindet, über einen Blutdruckmesser verfügt. Auch die Speicherung von benutzerspezifischen Kennungen in der zweiten Kommunikationseinheit ist vorstellbar, so dass diese an die erste Kommunikationseinheit übertragen werden können, z. B. "Benutzer B ist Sanitäter" oder "Benutzer B hat auch ein Handy (neben dem Festnetzgerät)".

Zudem ist vorteilhaft, dass das Kommunikationsmittel der jeweiligen Kommunikationseinheit ein visueller Signalgeber, insbesondere eine Displayeinheit ist und/oder ein akustischer Signalgeber, insbesondere ein Lautsprecher ist und/oder ein fühlbarer Signalgeber insbesondere ein Vibrationsgeber ist. Diese drei Signalgeber, die verschiedene Sinne ansprechen können, sind dabei in Kombination oder einzeln benutzbar. So kann der Benutzer der ersten Kommunikationseinheit aufgrund seiner aktuellen Situation die einzelnen Signalgeberarten in seiner Kommunikationseinheit konfigurieren. Störende und/oder nicht gewollte Signalgeber können damit gezielt ein- oder ausgeschaltet werden. Zudem ist vorstellbar, dass der visuelle Signalgeber eine Videoprojektionseinheit ist, insbesondere ein LCD-Projektor oder DLP-Projektor oder LED-Projektor oder LCoS-Projektor oder Laser-Projektor oder SXRD-Projektor ist. Damit wird es ermöglicht, einem größeren Kreis von interessierten Benutzern die Informationen des Status der Kommunikationseinheit durch die entsprechende Kommunikationseinheit zur Verfügung zu stellen. Z. B. kann auf dem Kommunikationsmittel der ersten Kommunikationseinheit die Zustandsinformation "Besetzt" der zweiten Kommunikationseinheit als Ikone oder Punkt angezeigt werden.

Weiterhin ist vorteilhaft, dass die Information über den Bereitschaftszustand und/oder die Funktionsmerkmale der zweiten Kommunikationseinheit der ersten Kommunikationseinheit in Intervallen oder kontinuierlich in Abhängigkeit des Realzeitverhaltens der Kommunikationseinheit über das Kommunikationsmittel übertragbar ist und umgekehrt. Damit kann gewährleistet werden, dass der Benutzer der ersten Kommunikationseinheit über das Verhalten der zweiten Kommunikationseinheit informiert wird. Sollte beispielsweise ein Funktionsmerkmal der zweiten Kommunikationseinheit, dass der Benutzer A eine erste mobile Kommunikationseinheit gerne zur Kommunikation nutzen will, zum aktuellen Zeitpunkt für den Benutzer A der mobilen Kommunikationseinheit nicht nutzbar sein, so könnte dieser ohne dass er in Aktion treten muss, den nächstmöglichen Zeitpunkt der Möglichkeit zur Nutzung der Funktion übermittelt bekommen. Dabei ist es vorstellbar, dass der Benutzer A der mobilen Kommunikationseinheit die Länge des Intervalls oder den Zeitrahmen der Kontinuität einstellen kann. Diese Einstellung kann über die mobile Kommunikationseinheit oder über einen erreichbaren Servicepunkt des Kommunikationssystems wie z. B. einer Servicehotline ermöglicht werden.

Zweckmäßigerweise entspricht das Kommunikationssystem der Architektur eines Mobilfunknetzes und/oder eines Festnetzes. Dadurch kann es ermöglicht werden, eine hausinterne Festnetzkommunikationsanlage (ISDN-Anlage) an das Kommunikationssystem zu koppeln. Zudem sind Mobilfunkendgeräte, die dem GSM oder UMTS-Standard entsprechen ebenfalls an das Kommunikationssystem koppelbar. Somit können Statutsinformationen zwischen Endgeräten, die einem Mobilfunkstandard entsprechen und Endgeräten die der Festnetztechnologie zugeordnet werden, Informationen über den Status der Verbindungsinformation oder der Funktionsmerkmale ausgetauscht werden.

Ebenfalls ist vorteilhaft, dass in der ersten und/oder zweiten Kommunikationseinheit ein Identifikationssatz, der eine weitere (ebenfalls zweite und/oder erste) Kommunikationseinheit eindeutig charakterisiert, eingebbar und/oder wählbar ist. Dieser Identifikationssatz ist von der entsprechenden Kommunikationseinheit an das Kommunikationssystem übermittelbar, der zur Identifizierung und anschließenden Überprüfung des Zustandes der weiteren Kommunikationseinheit bzw. zur Abfrage der Zustandsinformationen der weiteren Kommunikationseinheit dient. Dieser Identifikationssatz kann eine MSISDN oder eine IMSI oder eine IMEI oder eine eindeutige Kennung sein, insbesondere eine MAC-Adresse eines Netzwerkadapters, die in der entsprechenden Kommunikationseinheit vorhanden bzw. integriert oder gespeichert ist. Damit wird beispielsweise dem Benutzer A einer mobilen Kommunikationseinheit ermöglicht, Verbindungsstatusinformationen oder Funktionsmerkmalsinformationen einer zweiten Kommunikationseinheit zu erlangen. Auch ist es vorstellbar, dass die mobile Kommunikationseinheit mehrere Identifikationssätze von mehreren zweiten Kommunikationseinheiten, z. B. von einer Gruppe insbesondere durch ein Abfrage-Profil, abfragen kann, so dass eine Statusabfrage von mehreren zweiten Kommunikationseinheiten - mehr oder weniger gleichzeitig oder in einer vorgebbaren Reihenfolge - möglich ist.

Weiterhin ist es vorteilhaft, dass ein Konverter zwischen dem Mobilfunknetz und dem Festnetz koppelbar ist, wobei durch den Konverter eine Kompatibilität der verwendeten Protokolle in dem Mobilfunknetz mit dem verwendeten Protokoll in dem Festnetz entsteht. Dabei kann durch den Konverter eine Übertragung von Informationen, welche Sprache und/oder Daten und/oder Zustandsinformationen beinhalten können, von der ersten mobilen Kommunikationseinheit zu der zweiten Kommunikationseinheit erfolgen, welche unterschiedliche Netzwerkarchitekturen beinhalten kann. Zudem wird es ermöglicht, dass auch der Status der zweiten Kommunikationseinheit, auch wenn diese der Festnetztechnologie angehört, sicher dem Mobilfunknetz übertragen werden kann. Weiterhin hat es sich als vorteilhaft erwiesen, dass der Konverter zwischen einer MSC (Mobile Switching Center) des Mobilfunknetzes und einer CSCF (Call Session Control Function) des Festnetzes gekoppelt wird. Dabei simuliert der Konverter auf Seiten des Festnetztelefoniebereiches ein an das CSCF angeschlossenes Festnetzendgerät, wobei dieses jedoch die Informationen der zugehörenden Mobiltelefonendgeräte beinhaltet. Genau umgekehrt geschieht dies auf Seiten der Mobiltelefonie. Somit kann mit dem MSC wenigstens ein weiteres Mobiltelefon simuliert werden, wobei diese jedoch als Festnetzgeräte fungieren. Dadurch wird es ermöglicht, dass die einzelnen Kommunikationseinheiten, ob aus dem Bereich der Festnetztechnologie oder der Mobilfunktechnologie, ohne eine weitere Datenverbindung in das jeweilige andere Netz integriert werden können. Der Konverter kann als Entität in einem NGIN (Next Generation Intelligent Network) Verwendung finden, das leitungsbasierte und IP-basierte Telefonnetzwerke verbinden kann. Damit kann die CSCF, die für den Austausch von Signalisierungsinformationen zwischen der mobilen Kommunikationseinheit und der zweiten Kommunikationseinheit zuständig ist (z.B. für den Rufaufbau) und den Kern eines IMS (IP Multimedia Subsystem) bildet, durch Funktionalitäten durch den Konverter erweitert werden. Ebenfalls ist es denkbar, dass die Logik für einen derartigen Aggregationsprozess seitens eines Presence Servers bereitgestellt wird. Dieser befindet sich im Wesentlichen in dem Bereich der Festnetztelefonie, kann jedoch alternativ auch direkt mit dem HLR (Home Location Register) verknüpft werden. In dem Presence Server können auch benutzerspezifische Informationen zu den Kommunikationseinheiten hinterlegt werden. Z. B. dass der Benutzer A über zwei mobile Kommunikationseinheiten und eine drahtgebundene Kommunikationseinheit verfügt, die gerade empfangsbereit sind. Diese Informationen können ebenfalls an das Kommunikationsmittel einer weiteren Kommunikationseinheit eines Benutzers B übertragen werden.

Zudem ist es vorteilhaft, dass die Kommunikation in dem Mobilfunknetz und/oder dem Festnetz leitungsorientiert oder paketorientiert betreibbar ist. Bei paketorientierten Diensten (Datagrammdiensten), wird in jedem Paket die vollständige Adresse des Empfängers und Absenders abgelegt und unabhängig von den anderen Paketen durch das Netz geschleust. So stellen z. B. die paketorientierten GPRS-Dienste eine logische Beziehung zwischen zwei Benutzern her (virtuelle Verbindung), über welche die Datenübertragung erfolgt. Im Gegensatz dazu ist bei leitungsorientierten Diensten der Übertragungsweg für die Dauer der logischen Verbindung vorgegeben. Die leitungsorientierten Netze bieten den Vorteil, dass die Reihenfolge der übertragenen Pakete gesichert ist und der Anwender die Dienstqualität (Quality of Service, QoS) beim Verbindungsaufbau festlegen kann. Da beide Netzwerkarchitekturen zur Anwendung kommen können, können somit die Vorteile beider Architekturen genutzt werden.

Weiterhin ist es vorteilhaft, dass eine leitungsorientierte Kommunikation im Mobilfunknetz in eine paketorientierte Übertragung durch den Konverter konvertierbar ist. In diesem Fall kann der Konverter die leitungsbasierte Kommunikation aus dem Mobiltelefonbereich in eine IP basierte Übertragung übersetzen, so dass die ausgewählten Mobiltelefone als Festnetzeinheiten in dem Bereich der Festnetztelefonie integriert werden können. Umgekehrt wird über den Konverter eine IP-basierte Kommunikation derart übersetzt, dass die Endgeräte aus dem Mobiltelefonbereich dem MSC zugeordnet werden können.

Die erfindungsgemäße Aufgabe wird ebenfalls gelöst durch ein Verfahren zur Kommunikation einer ersten Kommunikationseinheit, die insbesondere als mobile Telefoneinheit ausgestaltet ist, in einem Kommunikationssystem, wobei die erste Kommunikationseinheit eine Schnittstelle aufweist, wobei über die Schnittstelle eine Mobilfunkverbindung mit dem Kommunikationssystem aufgebaut wird, und wobei wenigstens eine zweite Kommunikationseinheit, die über eine Kommunikationsverbindung mit dem Kommunikationssystem verbunden ist, vorgesehen ist, wobei zumindest eine Kommunikationseinheit über ein Kommunikationsmittel und zumindest die andere Kommunikationseinheit über eine abrufbare Zustandsinformation verfügt. Dazu ist erfindungsgemäß vorgesehen, dass zumindest eine Zustandsinformation der entsprechenden Kommunikationseinheit über das Kommunikationssystem an das Kommunikationsmittel der anderen Kommunikationseinheit übertragen wird.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht eines Kommunikationssystems mit einer ersten mobilen Kommunikationseinheit und
- Fig. 2: eine schematische Ansicht eines Kommunikationssystems mit einem Konverter, der zwischen einem Mobilfunknetz und einem Festnetz gekoppelt ist.

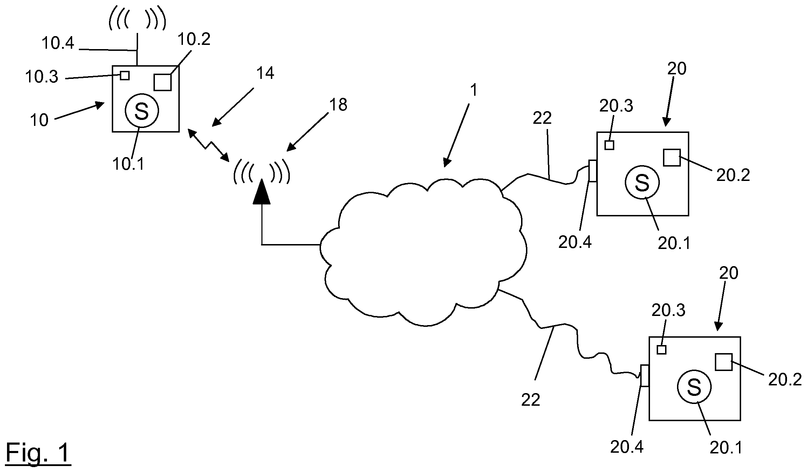

In Figur 1 ist schematisch ein Kommunikationssystem 1 dargestellt, das über eine Mobilfunkverbindung 14 mit einer ersten mobilen Kommunikationseinheit 10, die als mobile Telefoneinheit 10 ausgestaltet ist, gekoppelt ist. Die Mobilfunkverbindung 14 wird über eine Basisstation 18 und einer Schnittstelle 10.4 der mobilen Kommunikationseinheit 10 aufgebaut. Dabei weist die mobile Telefoneinheit 10 ein Kommunikationsmittel 10.2 auf. Die Basisstation 18 ist an ein Kommunikationssystem 1 gekoppelt. Eine Kommunikationseinheit 20 ist ebenfalls über eine Kommunikationsverbindung 22 an das Kommunikationssystem 1 gekoppelt und verfügt hierzu ebenfalls über eine Schnittstelle 20.4. Die Kommunikationsverbindung 22 kann dabei drahtlos oder drahtgebunden erfolgen, so dass verschiedene Verbindungstechnologien zum Einsatz kommen können, wie z. B. eine drahtgebundene, DECT-, GSM-, GPRS-, oder UMTS-Konnektivität mit dem Kommunikationssystem 1 erfolgen kann. Dabei weist die Kommunikationseinheit 20 eine Gerätezustandsinformation 20.1 auf. Die Gerätezustandsinformation 20.1 wird über das Kommunikationssystem 1 an die mobile Telefoneinheit 10 übermittelt, wobei diese über das Kommunikationsmittel 10.2 erfahrbar bzw. wiedergebbar ist. Die Kommunikationseinheit 20 weist ferner einen Identifikationssatz 20.3 auf, der die Kommunikationseinheit 20 eindeutig im Kommunikationssystem 1 charakterisiert. Dieser Identifikationssatz 20.3 kann in die mobile Telefoneinheit 10 eingegeben und/oder gespeichert werden und wird zur Bestimmung der Kommunikationseinheit 20 dem Kommunikationssystem 1 übermittelt. Dadurch lässt sich eine eindeutige logische Verbindung zwischen der mobilen Telefoneinheit 10 und der Kommunikationseinheit 20 erzeugen. Diese logische Verbindung kann in der mobilen Telefoneinheit 10 und/oder in dem Kommunikationsnetzwerk 1 und/oder in der Kommunikationseinheit 20 gespeichert werden. Dazu ist es vorstellbar, dass in dem Kommunikationsnetzwerk 1 der Identifikationssatz 20.3 der Kommunikationseinheit 20 zusammen mit einer eindeutigen Kennung - ebenfalls ein Identifikationssatz 10.3 - der mobilen Telefoneinheit 10 gespeichert wird. Dieser eindeutige Identifikationssatz 10.3 der mobilen Telefoneinheit 10 kann dabei die IMSI oder die IMEI oder die MSISDN der mobilen Telefoneinheit 10 sein. Aber auch jede von einem Benutzer eindeutige, in der mobilen Telefoneinheit 10 gespeicherte Kennung kann dabei als Identifikationssatz 10.3 dienen. Des Weiteren ist auch der Einsatz einer GUID (Global Unique ID) denkbar, die z. B. bei der Initialisierung der mobilen Telefoneinheit 10 vergeben wird oder bei einer gezielten Aktion durch einen Benutzer vergeben wird, die an der mobilen Telefoneinheit 10 ausgeführt werden muss. Die Zustandsinformation 20.1 von der Kommunikationseinheit 20 ist in den Figuren mit einem "S" angedeutet. Wie bereits erwähnt kann durch ein Sicherheits- und/oder Abfrage-Profil eingeschränkt werden, welche Gerätezustandsinformationen 20.1 von der Kommunikationseinheit 20 an die mobile Telefoneinheit 10 übermittelt werden dürfen und welche nicht. Auch die mobile Telefoneinheit 10 verfügt im vorliegenden Beispiel über eine Zustandsinformation 10.1, die von dem Kommunikationsmittel 20.2 der zweiten Kommunikationseinheit 20 angezeigt werden kann. Zur Verdeutlichung der Erfindung sind in der Fig. 1 beispielhaft zwei zweite Kommunikationseinheiten 20 dargestellt, wobei auch mehere zweite Kommunikationseinheiten 20 vorhanden sein können. Ebenfalls können auch zwei oder mehrere erste mobile Kommunikationseinheiten 10 in dem vor Kommunikationsnetzwerk 1 vorhanden sein.

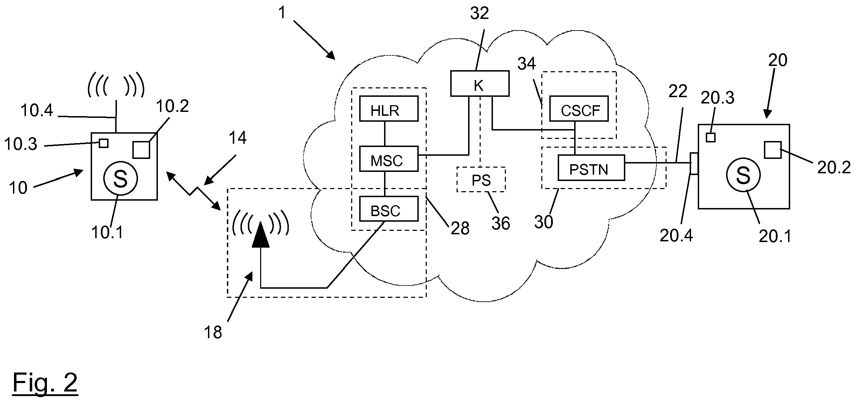

In Figur 2 ist schematisch ein Kommunikationssystem 1 mit einer ersten mobilen Kommunikationseinheit 10 und einer zweiten Kommunikationseinheit 20 dargestellt. Die mobile Kommunikationseinheit 10 ist über eine Kommunikationsverbindung 14 mit einer Basisstation 18 drahtlos verbunden. Das Kommunikationssystem 1 weist Teile einer leitungsbasierten 28 und einer mobilfunknetzbasierten 30 Architektur auf. Dabei wird schematisch das Mobilfunknetz 28 durch einen Base Station Controller (BSC), einem Mobile Switching Center (MSC) und einem Home Location Register (HLR) dargestellt. Das Festnetz 30 wird schematisch durch eine PSTN (Public Standard Telephone Network) wiedergegeben, an welcher die drahtgebundene zweite Kommunikationseinheit 20 angeschlossen ist. Auch ist der Einsatz einer zweiten Kommunikationseinheit 20 möglich, die drahtlos nach dem DECT-Standard mit dem Festnetz 30 verbunden ist. Die CSCF (Call Session Control Function), das Kernstück eines IMS 34 (IP Multimedia Subnet), soll dabei schematisch für die gesamte Architektur des IMS 34 stehen. Ein Konverter 32 ist dabei an das Mobilfunknetz 28 und auch an das Festnetz 30 gekoppelt. Dieser Konverter 32 bildet das Verbindungsglied zwischen dem MSC und dem CSCF. Die zweite Kommunikationseinheit 20 ist dabei drahtgebunden an das Festnetz 30 gekoppelt und verfügt somit über eine Kommunikationsverbindung 22 mit dem Festnetz 30 und dadurch auch mit dem Kommunikationssystem 1. Ein Identifikationssatz 20.3 zur Charakterisierung der zweiten Kommunikationseinheit 20, welcher über die mobile Kommunikationseinheit 10 eingegeben werden kann, kann über die Mobilfunkverbindung 14 dem Mobilfunknetz 28 übermittelt werden. Die weitere Übermittelung des Identifikationssatzes 20.3 erfolgt in dem Kommunikationssystem 1 an das Festnetz 30, welches diesen Identifikationssatz 20.3 an die Kommunikationseinheit 20 weiterleitet. An diesem Identifikationssatz 20.3 können Abfragesätze angefügt sein, die gezielte Zustandsinformationen 20.1 aus der zweiten Kommunikationseinheit 20 abfragen können. So wird es einem Benutzer ermöglicht, bestimmte Verbindungsmerkmale und/oder Funktionsmerkmale der zweiten Kommunikationseinheit 20 abzufragen. Aber auch der Benutzer der zweiten Kommunikationseinheit 20 kann Zustandinformationen 10.1 von der ersten mobilen Kommunikationseinheit 10 abfragen bzw. auf dem Kommunikationsmittel 20.2 angezeigt bekommen.

Der optional vorhandene Presence Server 36 ist in der Fig. 2 abgebildet. Dieser befindet sich im Wesentlichen in dem Bereich der Festnetztelefonie 30, kann jedoch alternativ auch direkt mit dem HLR (Home Location Register) verknüpft werden, wie dargestellt.

Mit Hilfe des schematisch dargestellten Aufbaus des Kommunikationssystems 1 in Figur 1 und 2 ist es nun möglich, ohne weitere Datenverbindungen oder Kommunikationsverbindungen 14, 22 zwischen den Entitäten 10, 20, diese in das andere Netz zu integrieren. Auch kann die entsprechende Übertragung der jeweiligen Zusatzinformationen 10.1, 20.1 ohne eine erforderliche Anwahl bzw. Anruf der anderen Kommunikationseinheit erfolgen. Dieses ist besonders in dem Falle einfach zu bewerkstelligen, wenn auf Seiten der Festnetztelefonie der Voice Over IP-Standard verwendet wird, da dieser ohnehin eine IP-basierte Kommunikation bereitstellt, welche unproblematisch erweitert werden kann.

### Bezugszeichenliste

- 1: Kommunikationssystem
- 10: erste Kommunikationseinheit, insbesondere mobile Telefoneinheit
- 10.1: Zustandsinformation
- 10.2: Kommunikationsmittel
- 10.3: Identifikationssatz
- 10.4: Schnittstelle
- 14: Mobilfunkverbindung
- 18: Basisstation
- 20: zweite Kommunikationseinheit
- 20.1: Zustandsinformation
- 20.2: Kommunikationsmittel
- 20.3: Identifikationssatz
- 20.4: Schnittstelle
- 22: Kommunikationsverbindung
- 28: Mobilfunknetz
- 30: Festnetz
- 32: Konverter
- 34: IMS
- 36: Presence Server

## Patentansprüche

1. Kommunikationssystem (1) mit
wenigstens einer ersten Kommunikationseinheit (10), die insbesondere als eine mobile Telefoneinheit (10), ausgestaltet ist, wobei die erste Kommunikationseinheit (10) eine Schnittstelle (10.4) aufweist, und über die Schnittstelle (10.4) eine Mobilfunkverbindung (14) mit dem Kommunikationssystem (1) aufbaubar ist, und
wenigstens einer zweiten Kommunikationseinheit (20), die über eine Kommunikationsverbindung (22) mit dem Kommunikationssystem (1) verbunden ist,
wobei zumindest eine Kommunikationseinheit (10, 20) über ein Kommunikationsmittel (10.2, 20.2) und zumindest die andere Kommunikationseinheit (20, 10) über eine abrufbare Zustandsinformation (10.1, 20.1) verfügt, wobei
eine Übertragung zumindest einer Zustandsinformation (10.1, 20.1) der entsprechenden Kommunikationseinheit (10, 20) über das Kommunikationssystem (1) an das Kommunikationsmittel (20.2, 10.2) der anderen Kommunikationseinheit (20, 10) stattfindet,
**dadurch gekennzeichnet,**
**dass** ein Konverter (32) zwischen einem Mobilfunknetz (28) und einem Festnetz (30) des Kommunikationssystems gekoppelt wird, wobei durch den Konverter (32) eine Kompatibilität der verwendeten Protokolle in dem Mobilfunknetz (28) mit den verwendeten Protokollen in dem Festnetz (30) entsteht und dass der Konverter (32) als Verbindungsglied zwischen einem MSC des Mobilfunknetzes (28) und einem CSCF des Festnetzes (30) dient,
wobei der Konverter (32) auf der Seite des Mobilfunknetzes (28) wenigstens eine drahtgebundene Kommunikationseinheit (20) simuliert und/oder auf der Seite des Festnetzes (30) wenigstens eine mobile Kommunikationseinheit (10) simuliert.

2. Kommunikationssystem (1) nach Anspruch 1,
**dadurch gekennzeichnet,**
**dass** die Übertragung der Zustandsinformation (10.1, 20.1) der entsprechenden Kommunikationseinheit (10, 20) über das Kommunikationssystem (1) an das Kommunikationsmittel (20.2, 10.2) der anderen Kommunikationseinheit (20, 10) wählfreiübertragbar ist.

3. Kommunikationssystem (1) nach Anspruch 1 oder 2,
**dadurch gekennzeichnet,**
**dass** die Kommunikationsverbindung (22) teilweise drahtlos oder drahtgebunden aufbaubar ist und/oder dass Zustandsinformationen (20.1) von mehreren Kommunikationseinheiten (20) an ein Kommunikationsmittel (10.2) einer weiteren Kommunikationseinheit (10) übertragbar sind.

4. Kommunikationssystem (1) nach einem der vorhergehenden Ansprüche,
**dadurch gekennzeichnet,**
**dass** die Zustandsinformation (10.1, 20.1) der Kommunikationseinheit (10, 20) eine Verbindungsstatusinformation dieser aufweist, insbesondere eine Verbindungsstatusinformation über eine drahtgebundene, DECT-, GSM-, GPRS-, oder UMTS-Konnektivität mit dem Kommunikationssystem (1) aufweist und/oder dass die Zustandsinformation (10.1, 20.1) der Kommunikationseinheit (10, 20) eine Funktionsmerkmalsinformation dieser aufweist, insbesondere über eine SMS- und/oder EMS- und/oder MMS- und/oder WAP- und/oder JAVA- und/oder E-Mail- und/oder FAX-Funktionsmerkmalsinformation.

5. Kommunikationssystem (1) nach einem der vorhergehenden Ansprüche,
**dadurch gekennzeichnet,**
**dass** das Kommunikationsmittel (10.2, 20.2) ein visueller Signalgeber, insbesondere eine Displayeinheit ist und/oder ein akustischer Signalgeber, insbesondere ein Lautsprecher ist und/oder ein fühlbarer Signalgeber, insbesondere ein Vibrationsgeber ist.

6. Kommunikationssystem (1) nach einem der vorhergehenden Ansprüche,
**dadurch gekennzeichnet,**
**dass** eine Verbindungsstatusinformation (10.1, 20.1) und/oder eine Funktionsmerkmalsinformation (10.1, 20.1) der einen Kommunikationseinheit (20, 10) der anderen Kommunikationseinheit (10, 20), insbesondere der mobilen Telefoneinheit (10), als Zustandsinformation in Intervallen oder kontinuierlich in Abhängigkeit des Realzeitverhaltens der Kommunikationseinheit (20, 10) über das Kommunikationsmittel (10.2, 20.2) übertragbar ist.

7. Kommunikationssystem (1) nach einem der vorhergehenden Ansprüche,
**dadurch gekennzeichnet,**
**dass** von einer Kommunikationseinheit (10, 20) ein Identifikationssatz (10.3, 20.3), der eine andere Kommunikationseinheit (20, 10) eindeutig charakterisiert, an das Kommunikationssystem (1) übermittelbar ist, wobei der Identifikationssatz (10.3, 20.3) zur Überprüfung bzw. Abfrage des Gerätezustandes der Kommunikationseinheit (20, 10) dient.

8. Kommunikationssystem (1) nach Anspruch 7,
**dadurch gekennzeichnet,**
**dass** ein Presence Server (36) im Bereich des Festnetzes (30) vorgesehen ist oder der Presence Server (36) direkt mit einem HLR verknüpft ist und/oder dass im Presence Server (36) benutzerspezifische Daten zu den jeweiligen Kommunikationseinheiten (10, 20) eines Benutzers speicherbar sind, die mit den entsprechenden Zustandsinformationen (10.1, 20.1) der Kommunikationseinheiten(10, 20) verknüpfbar sind.

9. Kommunikationssystem (1) nach Anspruch 7,
**dadurch gekennzeichnet,**
**dass** die Kommunikation in dem Mobilfunknetz (28) und/oder dem Festnetz (30) leitungsorientiert oder paketorientiert betreibbar ist und/oder dass eine leitungsorientierte Kommunikation im Mobilfunknetz (28) in eine paketorientierte Übertragung durch den Konverter konvertierbar ist.

10. Verfahren zur Kommunikation einer ersten Kommunikationseinheit (10), die insbesondere als mobile Telefoneinheit (10) ausgestaltet ist, in einem Kommunikationssystem (1),
wobei die erste Kommunikationseinheit (10) eine Schnittstelle (10.4) aufweist, wobei über die Schnittstelle (10.4) eine Mobilfunkverbindung (14) mit dem Kommunikationssystem (1) aufgebaut wird, und
wobei wenigstens eine zweite Kommunikationseinheit (20), die über eine Kommunikationsverbindung (22) mit dem Kommunikationssystem (1) verbunden ist, vorgesehen ist,
wobei zumindest eine Kommunikationseinheit (10, 20) über ein Kommunikationsmittel (10.2, 20.2) und zumindest die andere Kommunikationseinheit (20, 10) über eine abrufbare Zustandsinformation (10.1, 20.1) verfügt, wobei
zumindest eine Zustandsinformation (10.1, 20.1) der entsprechenden Kommunikationseinheit (10, 20) über das Kommunikationssystem (1) an das Kommunikationsmittel (20.2, 10.2) der anderen Kommunikationseinheit (20, 10) übertragen wird,
**dadurch gekennzeichnet,**
**dass** ein Konverter (32) zwischen einem Mobilfunknetz (28) und einem Festnetz (30) des Kommunikationssystems gekoppelt wird, wobei durch den Konverter (32) eine Kompatibilität der verwendeten Protokolle in dem Mobilfunknetz (28) mit den verwendeten Protokollen in dem Festnetz (30) entsteht und dass der Konverter (32) als Verbindungsglied zwischen einem MSC des Mobilfunknetzes (28) und einem CSCF des Festnetzes (30) dient, wobei der Konverter (32) auf der Seite des Mobilfunknetzes (28) wenigstens eine drahtgebundene Kommunikationseinheit (20) simuliert und/oder auf der Seite des Festnetzes (30) wenigstens eine mobile Kommunikationseinheit (10) simuliert.

11. Verfahren zur Kommunikation nach Anspruch 10, **dadurch gekennzeichnet,**
**dass** es auf einem Kommunikationssystem gemäß der Ansprüche 1 bis 9 betrieben wird.

## Claims

1. Communication system (1) with
at least one first communication unit (10) which is designed in particular as a mobile telephone unit (10), the first communication unit (10) having an interface (10.4), and a mobile radio connection (14) being able to be established with the communication system (1) via the interface (10.4), and at least one second communication unit (20) which is connected to the communication system (1) via a communication connection (22),
wherein at least one communication unit (10, 20) has a communication means (10.2, 20.2) and at least the other communication unit (20, 10) has a retrievable status information (10.1, 20.1), wherein
at least one status information (10.1, 20.1) of the corresponding communication unit (10, 20) is transmitted via the communication system (1) to the communication means (20.2, 10.2) of the other communication unit (20, 10), **characterized**
**in that** a converter (32) is coupled between a mobile radio network (28) and a fixed network (30) of the communication system,
**in that** a converter (32) is coupled between a mobile radio network (28) and a fixed network (30) of the communications system, the converter (32) producing compatibility between the protocols used in the mobile radio network (28) and the protocols used in the fixed network (30), and in that the converter (32) serves as a link between an MSC of the mobile radio network (28) and a CSCF of the fixed network (30),
wherein the converter (32) simulates at least one wire-bound communication unit (20) on the side of the mobile radio network (28) and/or simulates at least one mobile communication unit (10) on the side of the fixed network (30).

2. Communication system (1) according to claim 1,
**characterized**
**in that** the transmission of the status information (10.1, 20.1) of the corresponding communication unit (10, 20) can be optionally transmitted via the communication system (1) to the communication means (20.2, 10.2) of the other communication unit (20, 10).

3. Communication system (1) according to claim 1 or 2,
**characterized**
**in that** the communication link (22) can be set up partially wirelessly or wired and/or in that status information (20.1) from a plurality of communication units (20) can be transmitted to a communication means (10.2) of a further communication unit (10).

4. Communication system (1) according to one of the preceding claims,
**characterized**
**in that**, the status information (10.1, 20.1) of the communication unit (10, 20) has a connection status information of the latter, in particular a connection status information via a wired, DECT, GSM, GPRS or UMTS connectivity with the communication system (1) and/or in that the status information (10.1, 20.1) of the communication unit (10, 20) has a functional feature information of the latter, in particular via a SMS- and/or EMS- and/or MMS- and/or WAP- and/or JAVA- and/or e-mail- and/or FAX-functional feature information.

5. Communication system (1) according to one of the preceding claims,
**characterized**
**in that** the communication means (10.2, 20.2) is a visual signal transmitter, in particular a display unit and/or an acoustic signal transmitter, in particular a speaker and/or a perceptible signal transmitter, in particular a vibration transmitter.

6. Communication system (1) according to one of the preceding claims,
**characterized**
**in that** a connection status information (10.1, 20.1) and/or a functional feature information (10.1, 20.1) of the one communication unit (20, 10) of the other communication unit (10, 20), in particular of the mobile telephone unit (10), can be transmitted as status information at intervals or continuously via the communication means (10.2, 20.2) as a function of the real-time behavior of the communication unit (20, 10).

7. Communication system (1) according to one of the preceding claims,
**characterized**
**in that** an identification set (10.3, 20.3), which uniquely characterizes another communication unit (20, 10), can be transmitted to the communication system (1) by a communication unit (10, 20), the identification set (10.3, 20.3) serving to check or query the device state of the communication unit (20, 10).

8. Communication system (1) according to claim 7,
**characterized**
**in that** a presence server (36) is provided in the region of the fixed network (30) or the presence server (36) is directly linked to an HLR and/or in that user-specific data relating to the respective communication units (10, 20) of a user can be stored in the presence server (36) and can be linked to the corresponding status information (10.1, 20.1) of the communication units (10, 20).

9. Communication system (1) according to claim 7,
**characterized**
**in that** the communication in the mobile radio network (28) and/or the fixed network (30) can be operated line-oriented or packet-oriented and/or in that line-oriented communication in the mobile radio network (28) can be converted into packet-oriented transmission by the converter.

10. Method for communication of a first communication unit (10), which is in particular configured as a mobile telephone unit (10), in a communication system (1), the first communication unit (10) having an interface (10.4), a mobile radio connection (14) being set up with the communication system (1) via the interface (10.4), and at least one second communication unit (20) being provided, which is connected to the communication system (1) via a communication link (22), at least one communication unit (10, 20) having a communication means (10.2, 20.2) and at least the other communication unit (20, 10) having a retrievable status information (10.1, 20.1), at least one status information (10.1, 20.1) of the corresponding communication unit (10, 20) being transmitted via the communication system (1) to the communication means (20.2, 10.2) of the other communication unit (20, 10),
**characterized**
**in that** a converter (32) is coupled between a mobile radio network (26) and a fixed network (30) of the communications system, the converter (32) establishing compatibility between the protocols used in the mobile radio network (28) and the protocols used in the fixed network (30), and in that the converter (32) serves as a link between an MSC of the mobile radio network (26) and a CSCF of the fixed network (30), the converter (32) simulating at least one wire-bound communication unit (20) on the side of the mobile radio network (26) and/or simulating at least one mobile communication unit (10) on the side of the fixed network (30).

11. Method for communication according to claim 10,
**characterized**
**in that** it is operated on a communication system according to claims 1 to 9.

## Revendications

1. Système de communication (1) avec
au moins une première unité de communication (10) conçue en particulier comme une unité téléphonique mobile (10), la première unité de communication (10) présentant une première interface (10.4) et une liaison radio mobile (14) pouvant être établie avec le système de communication (1) via l'interface (10.4), et
au moins une seconde unité de communication (20) qui est liée au système de communication (1) par une liaison de communication (22),
dans lequel au moins une unité de communication (10, 20) dispose d'un moyen de communication (10.2, 20.2) et au moins une autre unité de communication (20, 10) dispose d'une information d'état consultable (10.1, 20.1),
une transmission d'au moins une information d'état (10.1, 20.1) de l'unité de communication correspondante (10, 20) ayant lieu via le système de communication (1) au moyen de communication (20.2, 10.2) de l'autre unité de communication (20, 10)
**caractérisé en ce qu'**un convertisseur (32) est couplé entre un réseau de transmission mobile (28) et un réseau fixe (30) du système de communication, dans lequel il résulte une compatibilité des protocoles utilisés dans le réseau de transmission mobile (28) avec les protocoles utilisés dans le réseau fixe (30), et
**en ce que** le convertisseur (32) sert de lien entre un MSC du réseau de transmission mobile (28) et un CSCF du réseau fixe (30), dans lequel le convertisseur (32) simulant au moins une unité de communication à liaison filaire (20) du côté du réseau de transmission mobile (28) et/ou simulant au moins une unité de communication (10) du côté du réseau fixe (30).

2. Système de communication (1) selon la revendication 1 **caractérisé en ce que** la transmission de l'information d'état (10.1, 20.1) de l'unité de communication correspondante (10, 20) via le système de communication (1) peut être transférée au choix au moyen de communication (20.2, 10.2) de l'autre unité de communication (20, 10).

3. Système de communication (1) selon la revendication 1 ou 2 **caractérisé en ce que** la liaison de communication (22) peut être établie en partie sans fil ou par liaison filaire et/ou **en ce que** des informations d'état (20.1) de plusieurs unités de communication (20) peuvent être transférées à un moyen de communication (10.2) d'une autre unité de communication (10).

4. Système de communication (1) selon l'une quelconque des revendications précédentes **caractérisé en ce que** l'information d'état (10.1, 20.1) de l'unité de communication (10, 20) présente une information de statut de liaison de cette dernière, en particulier une information de statut de liaison via une connexion DECT, GSM, GPRS ou UMTS avec le système de communication (1), et/ou **en ce que** l'information d'état (10.1, 20.1) de l'unité de communication (10, 20) présente une information de caractéristique de fonctionnement de cette dernière, en particulier une information de caractéristique de fonctionnement par SMS et/ou par EMS et/ou par MMS et/ou par WAP et/ou par JAVA et/ou par e-mail et/ou par fax.

5. Système de communication (1) selon l'une quelconque des revendications précédentes **caractérisé en ce que** le moyen de communication (10.2, 20.2) est un générateur de signaux visuels, en particulier une unité d'affichage, et/ou un générateur de signaux acoustiques, en particulier un haut-parleur, et/ou un générateur de signaux tactiles, en particulier un vibreur.

6. Système de communication (1) selon l'une quelconque des revendications précédentes **caractérisé en ce qu'**une information de statut de liaison (10.1, 20.1) et/ou une information de caractéristique de fonctionnement (10.1, 20.1) de l'une des unités de communication (20, 10) peut être transférée à l'autre unité de communication (10, 20), en particulier de l'unité de téléphonie mobile (10) en tant qu'information d'état, par intervalles ou en continu, en fonction du comportement en temps réel de l'unité de communication (20, 10) via le moyen de communication (10.2, 20.2).

7. Système de communication (1) selon l'une quelconque des revendications précédentes **caractérisé en ce que** depuis une unité de communication (10, 20), on peut transmettre au système de communication (1) une ligne d'identification (10.3, 20.3) qui caractérise de façon univoque une autre unité de communication (20, 10), la ligne d'identification (10.3, 20.3) servant à contrôler ou respectivement à l'interrogation de l'état de l'appareillage de l'unité de communication (20, 10).

8. Système de communication (1) selon la revendication 7 **caractérisé en ce qu'**un serveur de présence (36) est prévu dans la zone du réseau fixe (30) ou le serveur de présence (36) est rattaché directement à un HLR, et/ou **en ce que** dans le serveur de présence (36), on peut enregistrer des données spécifiques de l'utilisateur des unités de communication respectives (10, 20) d'un utilisateur qu'on peut lier aux informations d'état correspondantes (10.1, 20.1) des unités de communication (10, 20).

9. Système de communication (1) selon la revendication 7, **caractérisé en ce que** la communication dans le réseau de transmission mobile (28) et/ou le réseau fixe (30) peut être gérée par circuits ou par paquets et/ou **en ce qu'**une communication gérée par circuits dans le réseau de transmission mobile (28) peut être convertie en transmission gérée par paquets par le convertisseur.

10. Procédé de communication d'une première unité de communication (10), conçue en particulier comme une unité téléphonique mobile (10), dans un système de communication (1),
dans lequel la première unité de communication (10) présente une première interface (10.4) et une liaison radio mobile (14) pouvant être établie via l'interface (10.4), et
dans lequel au moins une seconde unité de communication (20) qui est liée au système de communication (1) par une liaison de communication (22), est prévue, dans lequel au moins une unité de communication (10, 20) dispose d'un moyen de communication (10.2, 20.2) et au moins une autre unité de communication (20, 10) dispose d'une information d'état consultable (10.1, 20.1),
dans lequel au moins une information d'état (10.1, 20.1) de l'unité de communication correspondante (10, 20) est transmise via le système de communication (1) au moyen de communication (20.2, 10.2) de l'autre unité de communication (20, 10) **caractérisé en ce qu'**un convertisseur (32) est couplé entre un réseau de transmission mobile (28) et un réseau fixe (30) du système de communication, dans lequel il résulte une compatibilité des protocoles utilisés dans le réseau de transmission mobile (28) avec les protocoles utilisés dans le réseau fixe (30) grâce au convertisseur (32), et **en ce que** le convertisseur (32) sert de lien entre un MSC du réseau de transmission mobile (28) et un CSCF du réseau fixe (30), le convertisseur (32) simulant au moins une unité de communication à liaison filaire (20) du côté du réseau de transmission mobile (28) et/ou simulant au moins une unité de communication (10) du côté du réseau fixe (30).

11. Procédé de communication selon la revendication 10 **caractérisé en ce qu'**il est géré sur un système de communication selon les revendications 1 à 9.
